# EUROPÄISCHE PATENTANMELDUNG

(11) **EP 1 690 752 A1**
(43) Veröffentlichungstag der Anmeldung: **16.08.2006**
(21) Anmeldenummer: 05028735.8
(22) Anmeldetag: 30.12.2005
(51) Int. Cl.: B60R 21/239

(54) **Gassackmodul für eine Fahrzeuginsassen-Rückhaltevorrichtung**

(30) Priorität: 21.01.2005 DE 202005001000 U
(71) Anmelder: TRW Automotive Safety Systems GmbH, 63743 Aschaffenburg (DE)
(72) Erfinder: Lehmann, Michael, 63739 Aschaffenburg (DE)
(74) Vertreter: Strass, Jürgen

(57) **Zusammenfassung**

Ein Gassackmodul für eine Fahrzeuginsassen-Rückhaltevorrichtung umfaßt einen Gassack und eine Abströmsteuereinrichtung zur Freigabe und/oder Veränderung einer Abströmöffnung (24), durch die Gas aus dem Gassack entweichen kann. Die Abströmsteuereinrichtung weist wenigstens ein Element aus einem Gedächtnismetall auf.

## Beschreibung

Die Erfindung betrifft ein Gassackmodul für eine Fahrzeuginsassen-Rückhaltevorrichtung, mit einem Gassack und einer Abströmsteuereinrichtung zur Freigabe und/oder Veränderung einer Abströmöffnung, durch die Gas aus dem Gassack entweichen kann.

Ein solches Gassackmodul, bei dem ein Abströmbereich in der Gassackwand geöffnet werden kann, wenn eine Verringerung des Gassackinnendrucks erwünscht ist, ist z.B. aus der WO-A-2004/045919 bekannt. Eine pyrotechnische Ladung in Form einer Sprengschnur ist direkt auf dem Abströmbereich angebracht, so daß der Abströmbereich nach Zündung der Sprengschnur durchbrennt oder mechanisch aufgerissen wird.

Bei dem in der WO-A-03/097407 gezeigten Gassackmodul ist ein Sprengbolzen vorgesehen, um einen schlauchförmigen Abströmbereich des Gassacks freizugeben.

In der EP-A-1 279 574 ist ein Gassackmodul gezeigt, bei dem zur Freigabe von Abströmöffnungen in einem Halteteil ein Schieber so bewegt wird, daß darin gebildete Bohrungen mit den Abströmöffnungen fluchten. Das in den Gassack einströmende heiße Gas schmilzt den zwischen den Bohrungen des Schiebers und den Abströmöffnungen im Halteteil befindlichen Bereich des Gassacks, so daß ein Teil des Gases beim Befüllen aus dem Gassack austritt.

Aus der US 6 547 274 B ist ein Gassackmodul bekannt, bei dem der Öffnungsquerschnitt einer Abströmöffnung in einem Trägerblech mittels piezoelektrisch gesteuerter Klappen freigegeben werden kann. Die Stromzufuhr der piezoelektrischen Elemente wird z.B. abhängig von der Haltung oder dem Körperbau des Fahrzeuginsassen oder der Fahrzeuggeschwindigkeit gesteuert.

Die Erfindung schafft ein Gassackmodul, das ohne Vergrößerung des Bauraums eine für den Fahrzeuginsassen gefahrlose Steuerung des Abströmverhaltens ermöglicht.

Gemäß der Erfindung ist bei einem Gassackmodul der eingangs genannten Art vorgesehen, daß die Abströmsteuereinrichtung wenigstens ein Element aus einem Gedächtnismetall aufweist. Als Gedächtnismetalle werden spezielle Legierungen mit Formgedächtniseigenschaften bezeichnet, zu denen u.a. Nickel-Titan-, Kupfer-Zink-Aluminium-, Gold-Cadmium- oder Eisen-Mangan-Silizium-Legierungen gehören. Ein aus einer solchen Legierung gebildetes Element kann bei niedrigen Temperaturen in jede gewünschte Form gebogen werden, kehrt bei Erwärmung über eine sogenannte Transformationstemperatur aber wieder in seine vorher eingeprägte Ausgangsform zurück. Dabei werden relativ große Kräfte erzeugt, d.h. bei der Rückverformung kann auch ein nennenswerter Widerstand überwunden werden. Die für die Rückverformung erforderliche Erwärmung kann auch durch einen durch das Element fließenden elektrischen Strom herbeigeführt werden. Die Erfindung macht sich den Gedächtniseffekt zunutze, um das Abströmverhalten eines Gassackmoduls gezielt zu beeinflussen. Genauer gesagt wird das erfindungsgemäß vorgesehene Element aus Gedächtnismetall zur Steuerung des effektiven Querschnitts der Abströmöffnung genutzt, d.h. das Element sorgt für die Erzeugung einer Abströmöffnung und/oder eine Veränderung des Abströmquerschnitts. Durch den Einsatz eines solchen Elements kann auf aufwendige und groß bauende Öffnungsmechanismen verzichtet werden. Die erfindungsgemäße Abströmsteuereinrichtung hat zudem den Vorteil, daß weder Explosivstoffe oder dergleichen noch ein Schmelzen von Gassackgewebe für die Freigabe einer Abströmöffnung erforderlich sind, d.h. eine Ablösung von Partikeln ist ausgeschlossen.

Grundsätzlich kann die mittels der erfindungsgemäßen Abströmsteuereinrichtung gesteuerte Abströmöffnung an einem festen Bauteil des Gassackmoduls oder am Gassack vorgesehen sein.

Im letzteren Fall ist bei einer bevorzugten Ausführungsform vorgesehen, daß der Gassack wenigstens einen Draht aus Gedächtnismetall umfaßt.

Vorzugsweise ist der Draht in die Gassackwand integriert, insbesondere in das Gewebe der Gassackwand eingewebt. Bei Erwärmung des Drahts kommt es dann zu einer Verformung des Gassackwandgewebes, wodurch ein Abströmbereich in der Gassackwand erzeugt, vergrößert oder verkleinert werden kann.

Alternativ kann der Draht auch Teil einer Abdeckung sein, die über einer in der Gassackwand gebildeten Abströmöffnung angeordnet ist.

Eine weitere bevorzugte Ausführungsform sieht vor, daß das Element aus Gedächtnismetall an einem schlauchförmigen Abströmbereich des Gassacks angeordnet ist.

Eine Einschnürung des schlauchförmigen Abströmbereichs zur Hemmung des Gasaustritts bzw. eine Erweiterung einer Einschnürung zur Unterstützung des Gasaustritts kann dadurch erreicht werden, daß das Element aus Gedächtnismetall so ausgelegt ist, das es durch Erwärmung aus einer weniger stark gekrümmten Form in eine stärker gekrümmte Form, oder umgekehrt aus einer stärker gekrümmten Form in eine weniger stark gekrümmte Form überführt wird.

Zur gezielten Verformung eines Abströmbereichs kann das Element aus Gedächtnismetall auch so ausgelegt sein, daß es durch Erwärmung aus einer gestreckten Form in eine geknickte Form, oder umgekehrt aus eine geknickten Form in eine gestreckte Form überführt wird.

Bei einer Anordnung des Elements aus Gedächtnismetall an einer schwenkbaren Klappe kann auf diese Weise ein Scharniermechanismus zur Steuerung der Klappe hergestellt werden.

Es ist grundsätzlich auch möglich, einen Abströmbereich des Gassacks im wesentlichen vollständig aus einer Struktur aus Gedächtnismetall zu bilden.

Weitere Merkmale und Vorteile der Erfindung ergeben sich aus der nachfolgenden Beschreibung mehrerer beispielhafter Ausführungsformen unter Bezugnahme auf die beigefügten Zeichnungen. In den Zeichnungen zeigen schematisch:
- Figuren 1a, 1b: eine erste Ausführungsform der Erfindung;
- Figuren 2a, 2b: eine zweite Ausführungsform der Erfindung;
- Figuren 3a, 3b: eine dritte Ausführungsform der Erfindung; und
- Figuren 4a, 4b: eine vierte Ausführungsform der Erfindung.

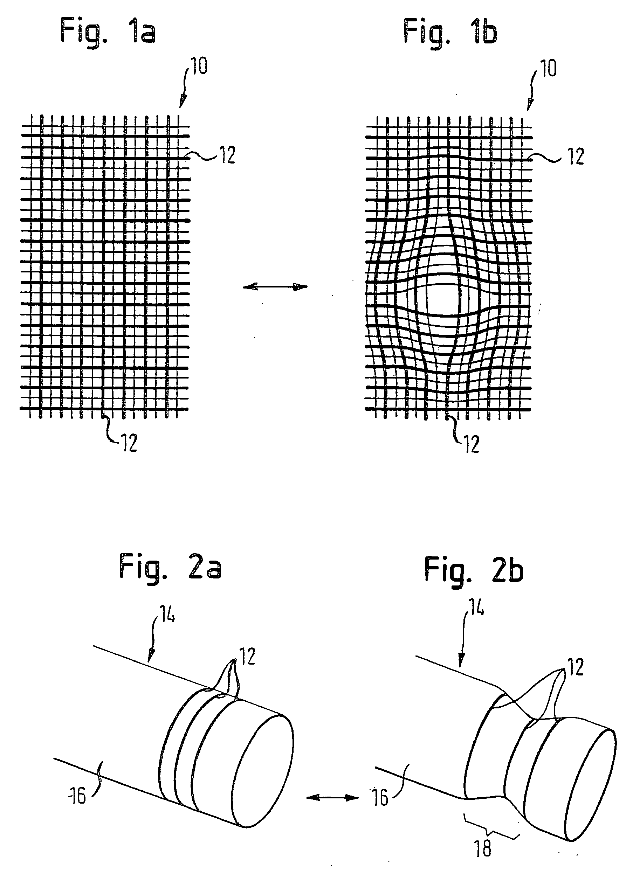

In Fig. 1a ist ein ausgebreitetes Gewebestück 10 eines Gassacks für ein Gassackmodul einer Fahrzeuginsassen-Rückhaltevorrichtung gemäß einer ersten Ausführungsform der Erfindung dargestellt. In das Gewebestück 10 sind Metalldrähte 12 aus Gedächtnismetall eingewebt, die die weiter oben beschriebenen Formgedächtniseigenschaften aufweisen. In dem in Fig. 1 gezeigten Zustand unterhalb der materialspezifischen Transformationstemperatur ist das Gewebestück 10 wenig gasdurchlässig oder gasdicht und aufgrund der Verformbarkeit der Metalldrähte 12 nur wenig steifer als ein vergleichbares Gewebe ohne eingewebte Metalldrähte 12.

Nach einem Erwärmen der Metalldrähte 12 über die Transformationstemperatur, was z.B. durch gezielten Stromfluß durch die Metalldrähte 12 herbeigeführt werden kann, nehmen die Metalldrähte 12 ihre in Fig. 1b gezeigte vorher eingeprägte Ausgangsform an. Diese Verformung der Metalldrähte 12 im Gewebestück 10 führt dazu, daß ein Bereich im Gewebestück 10 geschaffen oder vergrößert wird, durch den (mehr) Gas abströmen kann.

Das Gewebestück 10 kann entweder direkt in die Gassackwand eingewebt oder eine Abdeckung sein, die über einer in der Gassackwand gebildeten Abströmöffnung angeordnet ist. Es ist grundsätzlich auch möglich, den kompletten Abströmbereich aus dem Gedächtnismetall-Draht 12 herzustellen.

Bei der in den Figuren 2a und 2b gezeigten zweiten Ausführungsform der Erfindung ist am Gassack ein schlauchförmiger Abströmbereich 14 vorgesehen. In dem Schlauch 14 sind gemäß Fig. 2a mehrere Drähte 12 aus Gedächtnismetall radial umlaufend in den Mantel 16 des Schlauchs 14 eingenäht oder eingewebt, wobei sich die Krümmung der Metalldrähte 12 den angrenzenden Bereichen des Schlauchs 14 anpaßt.

Nach einem Erwärmen der Metalldrähte 12 nehmen diese eine Form an, die stärker als die angrenzenden Bereiche des Schlauchs 14 gekrümmt ist, wie in Fig. 2b gezeigt. Dadurch bildet sich ein eingeschnürter Bereich 18, der die abströmende Gasmenge pro Zeiteinheit gegenüber dem in Fig. 2a gezeigten Zustand begrenzt.

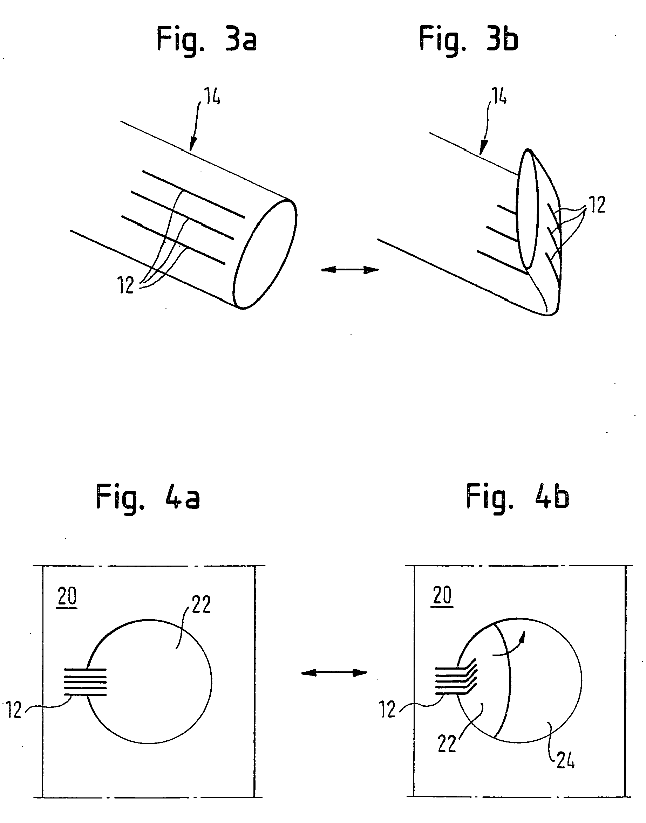

In den Figuren 3a und 3b ist eine dritte Ausführungsform der Erfindung dargestellt, bei der ebenfalls ein schlauchförmiger Abströmbereich 14 vorgesehen ist. Hier sind die Drähte 12 aus Gedächtnismetall jedoch in axialer Richtung eingenäht oder eingewebt (siehe Fig. 3a) und nehmen nach dem Erwärmen eine geknickte Form ein (siehe Fig. 3b). Das Abknicken der Drähte 12 bewirkt die Bildung einer Falte im Schlauch 14, die den Gasaustritt hemmt.

Das Prinzip der Knickbildung wird auch bei der in den Figuren 4a und 4b gezeigten Ausführungsform genutzt. Die im nicht erwärmten Zustand gestreckten Metalldrähte 12 erstrecken sich von einem Randbereich 20 auf eine schwenkbar angeordnete Klappe 22, die eine Abströmöffnung 24 verschließt. Nach dem Erwärmen knicken die Drähte 12 im Übergangsbereich ab und verschwenken die Klappe 22 in eine Öffnungsstellung, in der die Abströmöffnung 24 freigegeben ist. Die Drähte aus Gedächtnismetall 12 dienen somit als Scharnier, das durch Wärmezufuhr selbsttätig eine Verschwenkung der Klappe 22 vornimmt. Die Klappe 22 kann in einem geeigneten Bereich des Gassacks vorgesehen sein; es ist aber auch möglich, die Klappe 22 aus festem Material auszubilden und zur Freigabe einer in einem festen Bauteil des Gassackmoduls gebildeten Abströmöffnung 24 zu verwenden.

Bei allen Ausführungsformen ist auch eine "umgekehrte" Ausbildung denkbar, d.h. der in den Figuren 1a, 2a, 3a bzw. 4a gezeigte Zustand wird nach einem Erwärmen aus dem in den Figuren 1b, 2b, 3b bzw. 4b gezeigten Zustand durch entsprechende Verformung der Metalldrähte 12 erreicht.

Darüber hinaus erlaubt eine Nutzung des sogenannten Zweiwegeffekts, bei dem sich die durch das Erwärmen herbeigeführte Formänderung eines Elements aus Gedächtnismetall durch Abkühlung wieder zurückbildet, erweiterte Steuermöglichkeiten für die erfindungsgemäße Abströmsteuereinrichtung. So läßt sich z.B. durch zeitlich gesteuerten Stromfluß durch die Drähte 12 aus Gedächtnismetall die zugehörige Abströmöffnung mehrmals (teilweise) öffnen bzw. verschließen.

## Patentansprüche

1. Gassackmodul für eine Fahrzeuginsassen-Rückhaltevorrichtung, mit einem Gassack und einer Abströmsteuereinrichtung zur Freigabe und/oder Veränderung einer Abströmöffnung, durch die Gas aus dem Gassack entweichen kann, **dadurch gekennzeichnet, daß** die Abströmsteuereinrichtung wenigstens ein Element aus einem Gedächtnismetall aufweist.

2. Gassackmodul nach Anspruch 1, **dadurch gekennzeichnet, daß** die Abströmöffnung am Gassack vorgesehen ist.

3. Gassackmodul nach Anspruch 2, **dadurch gekennzeichnet, daß** der Gassack einen Draht (12) aus Gedächtnismetall umfaßt.

4. Gassackmodul nach Anspruch 3, **dadurch gekennzeichnet, daß** der Draht (12) in die Gassackwand integriert ist.

5. Gassackmodul nach Anspruch 3, **dadurch gekennzeichnet, daß** der Draht (12) Teil einer Abdeckung ist, die über einer in der Gassackwand gebildeten Abströmöffnung angeordnet ist.

6. Gassackmodul nach einem der vorhergehenden Ansprüche, **dadurch gekennzeichnet, daß** das Element aus Gedächtnismetall an einem schlauchförmigen Abströmbereich (14) des Gassacks angeordnet ist.

7. Gassackmodul nach einem der vorhergehenden Ansprüche, **dadurch gekennzeichnet, daß** das Element aus Gedächtnismetall so ausgelegt ist, daß es durch Erwärmung aus einer weniger stark gekrümmten Form in eine stärker gekrümmte Form, oder umgekehrt aus einer stärker gekrümmten Form in einer weniger stark gekrümmten Form überführt wird.

8. Gassackmodul nach einem der Ansprüche 1 bis 6, **dadurch gekennzeichnet, daß** das Element aus Gedächtnismetall so ausgelegt ist, daß es durch Erwärmung aus einer gestreckten Form in eine geknickte Form, oder umgekehrt aus einer geknickten Form in eine gestreckte Form überführt wird.

9. Gassackmodul nach Anspruch 8, **dadurch gekennzeichnet, daß** das Element aus Gedächtnismetall an einer schwenkbaren Klappe (22) angeordnet ist.

10. Gassackmodul nach einen der vorhergehenden Ansprüche, **dadurch gekennzeichnet, daß** ein Abströmbereich des Gassacks im wesentlichen vollständig aus einer Struktur aus Gedächtnismetall gebildet ist.

11. Gassackmodul nach Anspruch 1, **dadurch gekennzeichnet, daß** die Abströmöffnung an einem festen Bauteil des Gassackmoduls vorgesehen ist.
